# EUROPÄISCHE PATENTSCHRIFT

(11) **EP 3 480 493 B1**
(45) Veröffentlichungstag und Bekanntmachung des Hinweises auf die Patenterteilung: **16.03.2022**
(21) Anmeldenummer: 18203164.1
(22) Anmeldetag: 29.10.2018
(51) Int. Cl.: F16H 48/36, H02K 49/10, H02K 51/00, F16H 48/20

(54) **DIFFERENZIALANORDNUNG**
DIFFERENTIAL ASSEMBLY
DISPOSITIF DIFFÉRENTIEL

(30) Priorität: 07.11.2017 DE 102017219758
(43) Veröffentlichungstag der Anmeldung: 08.05.2019
(73) Patentinhaber: Deere & Company, Moline, IL 61265 (US)
(72) Erfinder: Lang, Matthias, 68163 Mannheim (DE); Gugel, Rainer, 68163 Mannheim (DE); Müller, David, 68163 Mannheim (DE)
(74) Vertreter: Lavall, Christian Henner

(56) Entgegenhaltungen:
- DE-A1-102005 007 650
- DE-A1-102008 000 672
- US-A1- 2014 183 996
- US-A1- 2014 315 675

## Beschreibung

Die Erfindung betrifft eine Differenzialanordnung mit mindestens einem Eingangselement und mindestens zwei Ausgangselementen.

Das Differenzialgetriebe oder kurz Differenzial genannt ist ein Umlaufrädergetriebe mit einem Eingangselement, das vorzugsweise als Antrieb wirkt und zwei Ausgangselementen, die vorzugsweise als Abtriebe wirken. Am häufigsten wird das Differenzial als Achsdifferenzial bei Kraftfahrzeugen verwendet. Dort ist sein Zweck, zwei Räder so anzutreiben, dass sie in Kurven unterschiedlich schnell drehen.

Das Differenzial hat wie sein Grundtyp, das Planetengetriebe, wenigstens drei Wellen.

Seine Besonderheit ist aber, dass die Standübersetzung in der Regel den Wert -1 hat. Als Standübersetzung wird das Übersetzungsverhältnis zwischen den beiden Abtriebswellen bezeichnet, wenn der Umlaufradträger (Steg, Käfig oder Korb) festgehalten wird. Mit einer Standübersetzung von -1 verteilt das Getriebe im Dreiwellenbetrieb die Abtriebsleistung vom Steg aus auf die beiden Abtriebswellen mit je gleich großem Drehmomentpunkt. Wenn die beiden Abtriebsräder gleich groß sind, ist der Getriebeaufbau symmetrisch.

Das Differenzialgetriebe befindet sich in der Regel zwischen den Rädern. Die getriebenen Abtriebswellen führen zu den Rädern. Beide Räder sind mit gleich großem Drehmoment angetrieben, auch wenn sie sich ungleich schnell drehen. Bei gleicher Drehzahl verursachen die Räder des Differenzialgetriebes keinen Leistungsverlust und keinen Verschleiß, da sie sich relativ zueinander nicht bewegen.

Als Sperrdifferenzial bezeichnet man ein Differenzialgetriebe, das im Unterschied zum üblichen leichtgängigen, offenen Ausgleichsgetriebe bis zu einem gewissen Grad schwergängig ist. Es bremst plötzlich auftretende Drehzahlerhöhungen an demjenigen angetriebenen Rad ab, das zum Beispiel seine Bodenhaftung durch Springen kurzzeitig verloren hat. Die Aufgabe eines Sperrdifferenzials ist, jedem Rad immer ein minimales Antriebsmoment zuzuführen und dennoch unterschiedliche Drehzahlen an beiden Rädern zuzulassen.

Bei der Anwendung von Differenzialen kann es vorteilhaft sein, die Verteilung des Drehmomentes an die beiden Achsen dynamisch zu verändern. Dabei kann es sich zum Beispiel um eine dynamische Verteilung von Drehmoment an Vorder- und Hinterachse mittels eines Zentraldifferenzials in Abhängigkeit eines Steigungswinkels, der momentanen Beschleunigung oder einer dynamischen Verteilung von Drehmoment an ein rechtes und linkes Rad handeln. Dies kann einer gezielten Unterstützung bzw. Unterdrückung von Kurvenfahrten dienen. Dies ist als Torque Vectoring bekannt.

Torque Vectoring (deutsch: Drehmomentverteilung) ist in der Regel die aktive Beeinflussung des Gierwinkels von Kraftfahrzeugen bzw. der Gierwinkelgeschwindigkeit. Es ermöglicht über die Räder ein Kraftfahrzeug zusätzlich zu kontrollieren, indem gezielt Antriebsmoment auf linke und rechte Räder unterschiedlich verteilt wird.

Ein klassisches, offenes Differenzialgetriebe verteilt Antriebsmomente immer gleich. Linke und rechte Räder übertragen immer das gleiche Moment, wodurch die Übertragung frei von Giermomenten ist.

Bei einem Sperrdifferenzial kann hingegen Drehmoment vom schneller drehenden auf das langsamer drehende Rad verlagert werden. Bei Kurvenfahrten treten so Lenkeffekte auf. Wenn bei normaler Kurvenfahrt das langsamere Rad mehr Antriebsmoment bekommt, bedeutet das, dass sich ein Fahrzeug mit Sperrdifferenzial Lenkbewegungen widersetzt und zum Untersteuern neigt, oder positiv ausgedrückt, es hat einen besseren Geradeauslauf. Bei Auftreten von hohen Querbeschleunigungen bei einem Differenzial wird das kurveninnere Rad entlastet und neigt zum Durchdrehen. Bei Verwendung eines Sperrdifferenzials wird ein Großteil des Drehmoments an das kurvenäußere Rad geleitet, wodurch beim Beschleunigen ein eindrehendes Giermoment entsteht und im Schiebebetrieb ein ausdrehendes Giermoment.

Torque-Vectoring-Systeme, die auch als Active-Yaw-Systeme bezeichnet werden, sind elektronisch gesteuert, sodass die Kurvenfahrt gezielt unterstützt oder unterdrückt wird. Damit beinhaltet ein solches System auch die Funktion eines elektronisch gesteuerten Sperrdifferenzials. Zum Zweck der Umverteilung wird ein Teil des Antriebsmoments vom Differenzialkorb direkt auf das gewünschte Rad geleitet.

In der Zeitschrift Landtechnik 68 (1), 2013, pp. 22 - 25, Karner et al. werden Hybridsysteme für landwirtschaftliche Nutzfahrzeuge beschrieben. Dabei wird ausgeführt, dass Leistungs-Verteilungs-Systeme für Anwendungen vorteilhaft sein können, die eine variable Drehzahl innerhalb eines bestimmten Bereichs benötigen. Die Bereichsvariabilität kann durch Geschwindigkeitsüberlagerungen mit Planetengetrieben realisiert werden. Die Hauptleistung kann von einer mechanischen Welle übertragen werden. Ein Elektromotor kann eingesetzt werden, um die bereitgestellte Leistung dem entsprechenden Leistungsbedarf anzupassen.

Im GSTF Journal on Agricultural Engineering (JAE), Vol. 1, No. 1, Februar 2014, S. 33 - 37, Karner et al. werden ebenfalls Hybridsysteme für landwirtschaftliche Nutzfahrzeuge mit Leistungs-Verteilungs-Systemen beschrieben, die eine variable Drehzahl innerhalb eines bestimmten Bereichs benötigen. Es kommt eine Kombination aus einer mechanisch angetriebenen Welle und einem Elektromotor, zur Bereitstellung eines variablen Leistungsbedarfs, zum Einsatz.

In der Karlsruher Schriftenreihe Fahrzeugsystemtechnik 15, 4. Fachtagung, Hybridantriebe für mobile Antriebsmaschinen, 20. Februar 2013, Karlsruhe, werden Hybridantriebe für landwirtschaftliche Nutzfahrzeuge beschrieben, bei denen auch Differenzialgetriebe zum Einsatz kommen.

US 2014/183996 A1 offenbart eine Differenzialanordnung mit einem magnetischen Drei-Wellen-Umlaufgetriebe.

US 2014/315675 A1 und DE 10 2005 007650 A1 offenbaren jeweils eine Differenzialanordnung, die unter den Wortlaut des Oberbegriffs des Anspruchs 1 fällt.

Aufgabe der Erfindung ist es, eine Differenzialanordnung anzugeben, bei der eine Verteilung von Drehmoment an Ausgangselemente dynamisch verändert werden kann. Diese Aufgabe wird erfindungsgemäß durch eine Differenzialanordnung mit den Merkmalen des Anspruchs 1 gelöst. Bevorzugte Varianten sind den Unteransprüchen, der Beschreibung und den Zeichnungen zu entnehmen.

Erfindungsgemäß steht mindestens ein Ausgangselement zur Verteilung von Drehmoment mit einer elektrischen Vorrichtung in Verbindung. Dabei ist vorzugsweise eine der beiden Ausgangswellen mit einer elektrischen Vorrichtung verbunden. Erfindungsgemäß handlet es sich bei der elektrischen Vorrichtung um eine elektrische Maschine. Mittels der erfindungsgemäßen Konstruktion kann das an diese Welle geleitete Drehmoment gesteuert werden. Dies ermöglicht eine Verteilung der Drehmomente an die Ausgangselemente. Es ist möglich, die Verteilung des Drehmomentes dynamisch zu verändern.

Vorzugsweise ist das Eingangselement eine Summenwelle und wird mechanisch angetrieben. Jedes Ausgangselement ist vorzugsweise mit einer Welle verbunden.

Bei einer besonders vorteilhaften Variante steht die erste elektrische Vorrichtung, die mit mindestens einem Ausgangselement gekoppelt ist, mit mindestens einer weiteren elektrischen Vorrichtung in Verbindung. Somit kann zwar nur eine Ausgangswelle mit einer elektrischen Maschine gekoppelt sein, aber es ist dennoch möglich, nicht nur diese Ausgangswelle zu beeinflussen, sondern durch die Verbindung mit der weiteren elektrischen Vorrichtung besteht die Möglichkeit, die abgegriffene Leistung der weiteren elektrischen Vorrichtung zuzuführen. Die Leistung, die man an der einen Ausgangswelle abgreift, wenn man die Welle beispielsweise bremst, kann im Kreis geführt werden und der weiteren elektronischen Vorrichtung, beispielsweise einer Lichtmaschine, zugeführt werden. Damit steht die Leistung als zusätzliche Eingangsleistung zur Verfügung. Ein solches System kann als zirkulierende Blindleistung bezeichnet werden. Diese zirkulierende Blindleistung kann an einer Seite abgegriffen und dann der anderen Seite zugeführt werden. Dadurch ist eine Verteilung von Drehmoment möglich. Man kann somit einer Ausgangswelle mehr Drehmoment zukommen lassen und der anderen Ausgangswelle entsprechend weniger, indem man an einer Ausgangswelle das Drehmoment abgreift und der anderen Ausgangswelle entsprechend zuführt. Durch die zirkulierende Blindleistung wird somit das abgegriffene Drehmoment der anderen Seite zusätzlich aufgebracht. Somit ist eine Verteilung von Drehmoment möglich, auch wenn das Differenzial an sich das Drehmoment im Verhältnis 1:1 verteilt. Durch die Kombination eines Differenzials mit mindestens einer elektrischen Vorrichtung oder Maschine bzw. mehreren elektrischen Maschinen wird eine Anordnung geschaffen, die eine gezielte Verteilung von Drehmoment bzw. von Leistung ermöglicht.

Vorzugsweise sind die Ausgangselemente longitudinal und/oder transversal zum Eingangselement ausgeführt. Insbesondere handelt es sich bei den Ausgangselementen um Ausgangswellen, die konstruktiv longitudinal und/oder transversal zu einem als Eingangswelle ausgeführten Eingangselement sind.

Erfindungsgemäß ist die Getriebestufe als magnetisches Drei-Wellen-Umlaufgetriebe ausgeführt, wobei das magnetische Drei-Wellen-Umlaufgetriebe einen ersten Ring mit einer ersten Anzahl an Polpaaren, einen zweiten Ring mit einer zweiten Anzahl an Polpaaren und einen dritten Ring mit einer Anzahl an Polstäben aufweist. Die Polstäbe sind derart angeordnet, dass sie ein magnetisches Feld zwischen den Polpaaren modulieren.

Erfindungsgemäß bildet ein äußerer Ring eine Differenzwelle, wobei die elektrische Vorrichtung über den äußeren Ring in die Getriebestufe dadurch integriert ist, dass Spulen um den äußeren Ring angeordnet sind.

Dadurch wird eine magnetische Getriebestufe im Drei-Wellen-Betrieb als Differenzialgetriebe eingesetzt. Da bei den in Achsdifferenzialgetrieben nötigen ganzzahligen Standübersetzungen von -1 oder +2 ungünstige Nebeneffekte in magnetischen Getriebestufen auftreten, ist es wünschenswert, Standübersetzungen zu realisieren, die zwar nahe -1 bzw. +2 liegen, jedoch diese Werte nicht exakt abbilden. Die erfindungsgemäße Anordnung ermöglicht die Verteilung von Drehmoment auf zwei Räder einer Achse mit Standübersetzungsverhältnissen von nicht exakt -1 oder +2. Die unsymmetrische Verteilung wird erfindungsgemäß durch die Kopplung eines Ausgangselements mit mindestens einer elektrischen Maschine kompensiert. Diese Kopplung kann auch für ein Torque Vectoring eingesetzt werden bzw. dazu, die gesamte Achse zu beschleunigen oder zu bremsen.

Erfindungsgemäß ist die elektrische Vorrichtung direkt in die Getriebestufe integriert. Dabei erweist es sich als besonders vorteilhaft, wenn die Summen-Getriebestufe elektromagnetisch ausgeführt ist.

Die erfindungsgemäße Integration einer elektrischen Vorrichtung in eine Differenzialanordnung kann das bisher herkömmlich auf mechanische Weise realisierte Torque Vectoring erzeugen. Wenn das Fahrzeug eine zweite elektrische Vorrichtung im Antriebsstrang vor dem Eingangselement des Differenzials aufweist, zum Beispiel eine entsprechend dimensionierte Lichtmaschine oder einen Motorgenerator in einem elektrisch leistungsverzweigten Getriebe, kann durch zirkulierende Blindleistung das Drehmoment beider Ausgangselemente im Differenzial unabhängig voneinander erhöht werden. Es ist somit nur eine elektrische Vorrichtung notwendig, um an beiden Wellen den gleichen Effekt zu erzielen, was große Vorteile hinsichtlich der Kosten und des Bauraumes mit sich bringt. Bei einer erfindungsgemäßen Ausführung der Getriebestufe als Magnetgetriebe befinden sich Permanentmagnete auf drei verschiedenen Ringen, welche mechanisch je an eine Welle gekoppelt sind. Die Ringe haben in der Regel keinen mechanischen Kontakt und arbeiten somit im Kraftschluss, sodass das Getriebe nur geringe Reibungsverluste produziert. Der Verschleiß beschränkt sich weitgehend auf die tragenden Wälzlager. Somit ist auch die Geräuschentwicklung nur sehr gering. Da sich die zwei Wellen nicht wie bei einem Zahnradgetriebe berühren, muss keine Schmierung eingesetzt werden. Zudem kann auf Wellendichtungen, die nach gewisser Zeit ihre Dichtheit verlieren können, verzichtet werden.

Das Magnetgetriebe ermöglicht es, dass das Getriebe bei einer Überlast nicht beschädigt wird, sondern in Schlupf gerät, bis die Last abnimmt. Nach einem Herunterfahren der Antriebsgeschwindigkeit kann wieder eingekoppelt werden. Zudem können auch hohe Drehzahlen realisiert werden. Die Erfindung ermöglicht es, dass auf eine Schmierung verzichtet werden kann und keine ruckartigen Beschleunigungen erfolgen.

Bei einer besonders vorteilhaften Variante der Erfindung weist die Anordnung keine ganzzahligen Standübersetzungen auf. Dabei erweist es sich als besonders günstig, wenn die Standübersetzungen nicht exakt bei -1 oder +2 liegen, sondern eine Abweichung bezüglich dieser Werte aufweisen. Vorzugsweise betragen diese Abweichungen mehr als 0,1 %, insbesondere vorzugsweise mehr als 1 %.

Bei einer Variante der Erfindung ist das Differenzial als Sperrdifferenzial ausgeführt, insbesondere vorzugsweise als elektronisch gesteuertes Sperrdifferenzial.

Bei einer besonders günstigen Ausführung der Erfindung weist mindestens eine Differenzwelle Permanentmagnete auf. Die Permanentmagnete sind vorzugsweise von festen Spulen umgeben.

Weitere Merkmale und Vorteile der Erfindung ergeben sich aus der Beschreibung von Ausführungsbeispielen anhand von Zeichnungen und aus den Zeichnungen selbst.

Dabei zeigt:
Figur 1 ein landwirtschaftliches Fahrzeug,
Figur 2 einen Antriebsstrang mit einer Differenzialanordnung in Wolf-Darstellung,
Figur 3 eine Differenzialanordnung in Wolf-Darstellung,
Figur 4 eine schematische Darstellung einer magnetischen Getriebestufe.

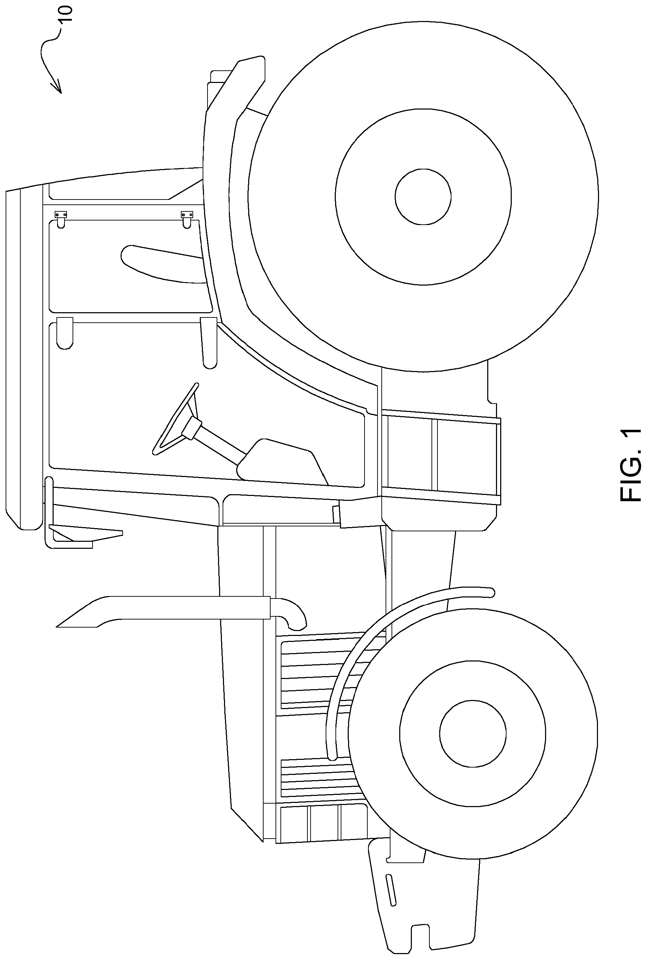

Keine der Figuren 1-4 zeigt das in Anspruch 1 genannte Merkmal, dass Spulen um den äußeren Ring angeordnet sind.

Figur 1 zeigt ein landwirtschaftliches Fahrzeug 10, in dem die erfindungsgemäße Differenzialanordnung 24 verwendet wird, um eine unsymmetrische Verteilung von Drehmomenten an zwei Wellen zu realisieren. Dabei kann auch ein Zentraldifferenzial zum Einsatz kommen.

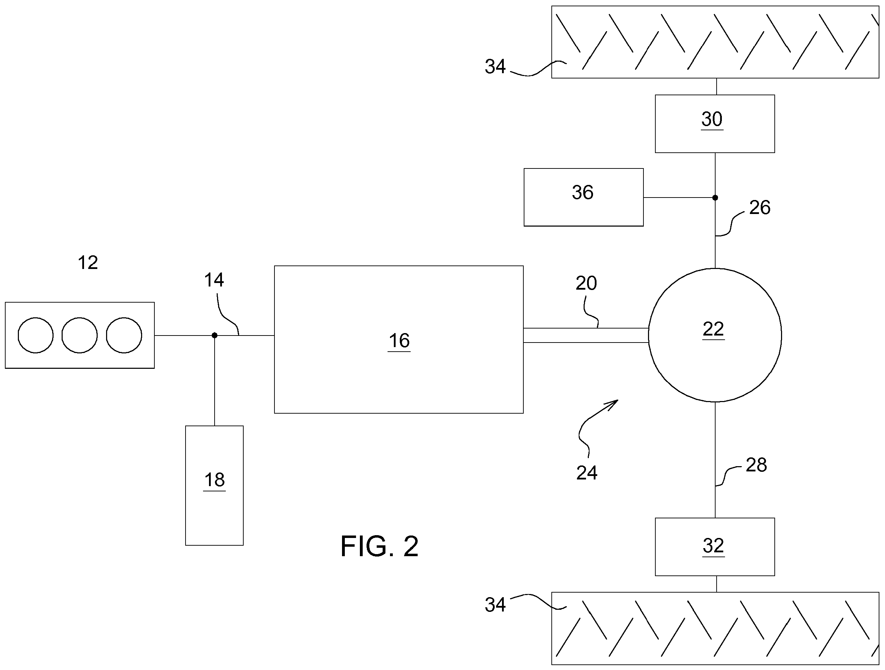

Figur 2 zeigt einen Antriebsstrang mit einer Differenzialanordnung 24 in Wolf-Darstellung.

Der Antriebsstrang umfasst einen Motor 12, der beispielsweise als Verbrennungsmotor (ICE: Internal Combustion Engine) ausgeführt sein kann. Eine Welle 14 führt zu einem Getriebe 16. Ein Motorgenerator 18 steht mit der Welle 14 in Verbindung. Bei dem Motorgenerator 18 handelt es sich vorzugsweise um einen elektrischen Generator bzw. eine elektrische Maschine, welche die Rotationsenergie der Welle 14 in elektrische Energie umwandelt.

Vom Getriebe 16 führt ein Eingangselement 20 zu einer Getriebestufe 22. Die Getriebestufe 22 ist Teil einer Differenzialanordnung 24.

Zur Darstellung wird das Wolf-Schema verwendet. Dabei wird ein Umlaufgetriebe durch einen Kreis mit drei nach außen gehenden Linien darstellt, welche drei Anschlusswellen darstellen. Diese Symbolik, Art und Verwendung werden beispielsweise in der VDI-Richtlinie 672 [VDI 672] definiert.

Die Summenwelle, also die Welle mit dem größten Moment, ist durch einen Doppelstrich gekennzeichnet. Die Wellen können als Vollwellen oder Hohlwellen ausgeführt sein. Das Wolf-Schema gibt die Systemstruktur in abstrahierter Form wieder, sodass die Ausführungsformen variieren können und nicht durch die Darstellung festgelegt sind.

Die Getriebestufe 22 ist erfindungsgemäß als ektromagnetische Getriebestufe ausgeführt. Von der Getriebestufe 22 führen Ausgangselemente 26, 28 zu weiteren Untersetzungsgetrieben 30, 32 und weiter zu Rädern 34 des Fahrzeugs 10. Erfindungsgemäß steht ein Ausgangselement 28 mit einer ersten elektrischen Vorrichtung 36 in Verbindung. Bei der elektrischen Vorrichtung 36 kann es sich um einen eine elektrische Maschine handeln, die Bewegungsenergie des

Ausgangselements 26 in elektrische Energie umwandelt. Die erfindungsgemäße Konstruktion ermöglicht es, die Verteilung des Drehmoments an die Ausgangselemente 26, 28 dynamisch zu verändern.

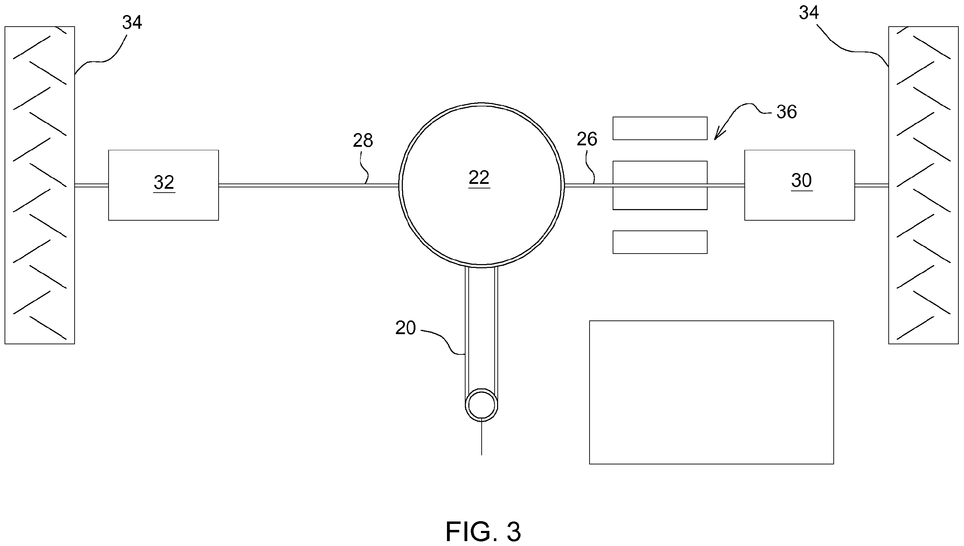

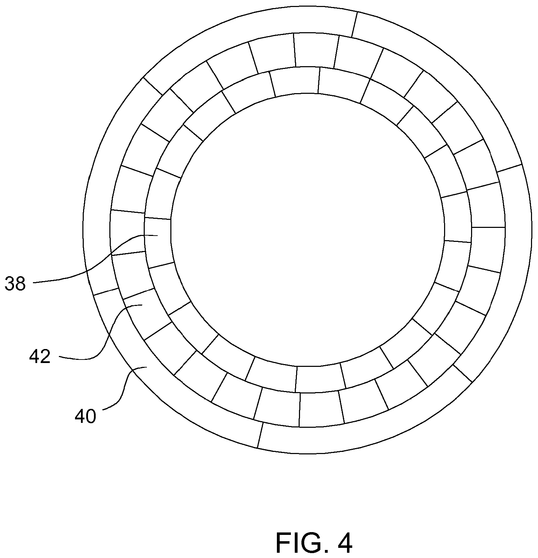

Figur 3 zeigt eine Variante, bei der die Getriebestufe 22 als elektromagnetische Getriebestufe ausgeführt ist. Der Aufbau einer solchen elektromagnetischen Getriebestufe wird beispielhaft in Figur 4 erläutert.

Figur 4 zeigt die als magnetisches Umlaufgetriebe ausgeführte Getriebestufe 22. Sie besteht aus drei, zueinander drehbar gelagerten Ringen 38, 40, 42. Die einzelnen Ringe sind konzentrisch gelagert und haben eine gemeinsame Drehachse. Durch das als Eingangswelle ausgeführte Eingangselement 20 wird ein Drehmoment oder Leistung eingeleitet, innerhalb der Getriebestufe 22 moduliert und durch als Ausgangswellen ausgeführte Ausgangselemente 26, 28 ausgeleitet. Die als Umlaufgetriebe ausgeführte Getriebestufe 22 weist einen inneren Ring 38 auf. Der innere Ring 38 weist am Umfang verteilt Magnetpole auf, die mit den Magnetpolen und ferromagnetischen Stäben der weiteren Ringe in Wechselwirkung treten. Die Magnetpole des inneren Rings 38 können auch durch elektromagnetische Spulen ersetzt werden.

Der innere Ring 38 dreht sich langsam mit einer geringen Drehzahl und weist mehr Polpaare auf als der äußere Ring 40. Der äußere Ring 40, der ebenfalls als Ring ausgebildet ist, dreht sich schnell mit einer hohen Drehzahl und weist wenige Polpaare auf.

Der mittlere Ring 42 befindet sich radial zwischen dem äußeren Ring 40 und dem inneren Ring 38. Der mittlere Ring 42 weist ferromagnetische Stäbe auf. Die Anzahl der ferromagnetischen Stäbe kann konstruktiv bedingt festgelegt sein, diese können jedoch auch variabel ausgeführt werden. Der mittlere Ring 42 kann mehrere konzentrische Ringabschnitte aufweisen, die durch Verdrehen in Überlappung gebracht werden können, wodurch eine neue Anzahl von ferromagnetischen Polen bzw. ferromagnetischen Stäben gewählt werden kann. Das Verhältnis zwischen den Polen des mittleren Rings 42 und des inneren Rings 38 kann dadurch verändert werden.

Der äußere Ring 40 weist Magnetpole auf, die entlang des Umfangs verteilt angeordnet sind. Die Magnetpole könne auch durch elektromagnetische Spulen ersetzt werden. Diese können einzeln gewickelt sein oder als eine verteilte Wicklung ausgebildet sein. Die Anzahl der Magnetpole des äußeren Rings 40 unterscheidet sich von der Anzahl der Magnetpole am inneren Ring 38.

Die Anzahl der Magnetpole bzw. Spulen am äußeren Ring 40 kann mittels einer elektronischen Steuerung variiert werden. Es können wenigstens zwei unterschiedliche Gruppen von Magnetpolen beschaltet werden. Hierzu sind im äußeren Ring 40 bereits beide Gruppen von Magnetpolen eingebracht. Im Betrieb ist davon jeweils eine Gruppe von Magnetpolen geschaltet, während die zweite Gruppe inaktiv bleibt. Durch die Steuerung kann mittels Beschalten von zusätzlichen Magnetpolen die Anzahl der Magnetpole erhöht bzw. durch ein gezieltes Abschalten verringert werden.

Bei einer festgelegten Anzahl von Magnetpolen am Innenring 38 und einer festgelegten Anzahl von ferromagnetischen Stäben am mittleren Ring 42 existieren zwei Lösungen für die Anzahl von Magnetpolen am äußeren Ring 40. Besonders wenn die Magnetpole durch elektromagnetische Spulen ersetzt werden, ist es vorteilhaft, wenn die Anzahl dem kleinsten gemeinsamen Vielfachen der beiden Lösungen entspricht. Durch die Steuerung können beide Lösungen in einer Ausführung umgesetzt werden. Ein Ansteuern kann durch eine unterschiedliche Bestromung mittels einer elektrischen Schaltung realisiert werden. Üblich ist das Erzeugen eines magnetischen Feldes mit einem dreiphasigen Wechselstrom. Es kann auch ein anderer Stromverlauf verwendet werden, jedoch muss dazu die Anzahl der Spulen neu berechnet werden.

Der innere Ring 38 weist gegenüber dem äußeren Ring 40 eine höhere Anzahl an Polpaaren und eine geringere Drehzahl auf. Zudem weißt der innere Ring 38 ein höheres Drehmoment auf.

Der äußere Ring 40 weist gegenüber dem inneren Ring 38 eine geringere Anzahl an Polpaaren und eine höhere Drehzahl auf. Zudem weißt der äußere Ring 40 ein geringeres Drehmoment auf.

Der innere Ring 38 steht mit dem Eingangselement 20 in Verbindung.

Die erfindungsgemäß als elektrische Maschine ausgeführte elektrische Vorrichtung 36, sollte vorzugsweise mit einer hohen Drehzahl und einem geringen Drehmoment betrieben werden. Die erfindungsgemäße Konstruktion ermöglicht einen solchen Betrieb. Durch die Ausführung der Getriebestufe 22 als elektromagnetische Getriebestufe mit einem langsamer drehenden inneren Ring 38 und einem demgegenüber schneller drehenden äußeren Ring 40 kann über den äußeren Ring 40 die elektronische Vorrichtung 36 leicht angekoppelt werden.

Eine solche Ankopplung der als elektrische Maschine ausgeführten elektrischen Vorrichtung 36 ist schematisch in Figur 3 dargestellt. Erfindugsgemäß ist die elektrische

Vorrichtung in die als magnetische Drei-Wellen-Umlaufgetriebe ausgeführte Getriebestufe integriert. Der äußere Ring 40 ist erfindungsgemäß J als Differenzwelle ausgebildet. Erfindungsgemäß sind Spulen um den äußeren Ring 40 angeordnet sein.

Die Ankopplung an den äußeren Ring 40 bringt gegenüber einer bei herkömmlichen Getriebeanordnungen notwendigen Ankopplung an den inneren Ring 38 erhebliche Vorteile mit sich. Der äußere Ring 40 ist viel leichter zugänglich. Eine Ankopplung an den äußeren Ring 40 benötigt deutlich weniger Bauraum.

## Patentansprüche

1. Differenzialanordnung (24) mit einer Getriebestufe (22),
wobei die Getriebestufe (22) mindestens ein Eingangselement (20) und mindestens zwei Ausgangselemente (26, 28) umfasst,
wobei mindestens ein Ausgangselement (26) zur Verteilung von Drehmoment mit mindestens einer ersten elektrischen Vorrichtung (36), bei der es sich um eine elektrische Maschine (36) handelt, in
Verbindung steht,
**dadurch gekennzeichnet,**
**dass** die Getriebestufe (22) als magnetisches Drei-Wellen-Umlaufgetriebe ausgeführt ist und
das magnetische Drei-Wellen-Umlaufgetriebe einen inneren Ring (38) mit einer ersten Anzahl an Polpaaren, einen äußeren Ring (40) mit einer zweiten Anzahl an Polpaaren und einen mittleren Ring (42) mit einer Anzahl an Polstäben aufweist, wobei die Polstäbe derart angeordnet sind, dass sie ein magnetisches Feld zwischen den Polpaaren modulieren, und
der innere Ring (38) eine höhere Anzahl an Polpaaren aufweist als der äußere Ring (40), und
der äußere Ring (40) als Differenzwelle ausgebildet ist und die elektrische Vorrichtung (36) über den äußeren Ring (40) in die Getriebestufe (22) dadurch integriert ist, dass Spulen um den äußeren Ring (40) angeordnet sind.

2. Differenzialanordnung nach Anspruch 1, **dadurch gekennzeichnet, dass** das Eingangselement (20) eine Summenwelle ist und mechanisch angetrieben wird, wobei jedes Ausgangselement (26, 28) mit einer Welle verbunden ist.

3. Differenzialanordnung nach einem der Ansprüche 1 bis 2, **dadurch gekennzeichnet, dass** die Anordnung (24) keine ganzzahlige Standübersetzung aufweist.

4. Differenzialanordnung nach Anspruch 3, **dadurch gekennzeichnet, dass** die Standübersetzung nicht exakt bei -1 oder +2 liegt, sondern eine Abweichung bezüglich dieser Werte aufweist, wobei die Abweichung vorzugsweise mindestens 0,1 %, insbesondere mindestens 1 % beträgt.

5. Differenzialanordnung nach einem der Ansprüche 1 bis 4. **dadurch gekennzeichnet, dass** die Getriebestufe (22) als Sperrdifferenzial ausgeführt ist, insbesondere als elektronisch gesteuertes Sperrdifferenzial.

6. Differenzialanordnung nach einem der Ansprüche 1 bis 5, **dadurch gekennzeichnet, dass** die erste elektrische Vorrichtung (36) mindestens mit einer weiteren elektrischen Vorrichtung in Verbindung steht.

## Claims

1. Differential assembly (24) having a gear stage (22), wherein the gear stage (22) comprises at least one input element (20) and at least two output elements (26, 28), wherein at least one output element (26) is connected to at least one first electrical device (36), which is an electrical machine (36), in order to distribute torque, **characterized in that** the gear stage (22) is designed as a magnetic three-shaft epicyclic gear train, and the magnetic three-shaft epicyclic gear train has an inner ring (38) with a first number of pole pairs, an outer ring (40) with a second number of pole pairs, and a central ring (42) with a number of pole rods, wherein the pole rods are arranged in such a manner that they modulate a magnetic field between the pole pairs, and the inner ring (38) has a greater number of pole pairs than the outer ring (40), and the outer ring (40) is embodied as a differential shaft, and the electrical device (36) is integrated in the gear stage (22) via the outer ring (40) by coils being arranged around the outer ring (40).

2. Differential assembly according to Claim 1, **characterized in that** the input element (20) is a summing shaft and is mechanically driven, each output element (26, 28) being connected to a shaft.

3. Differential assembly according to either of Claims 1 and 2, **characterized in that** the assembly (24) has a non-integer stationary transmission ratio.

4. Differential assembly according to Claim 3, **characterized in that** the stationary transmission ratio is not exactly -1 or +2 but rather has a deviation with respect to these values, the deviation preferably being at least 0.1%, in particular at least 1%.

5. Differential assembly according to one of Claims 1 to 4, **characterized in that** the gear stage (22) is designed as a locking differential, in particular as an electronically controlled locking differential.

6. Differential assembly according to one of Claims 1 to 5, **characterized in that** the first electrical device (36) is connected at least to one further electrical device.

## Revendications

1. Ensemble de différentiel (24) comprenant un étage de transmission (22), l'étage de transmission (22) comprenant au moins un élément d'entrée (20) et au moins deux éléments de sortie (26, 28), au moins un élément de sortie (26) étant en communication pour la répartition de couple avec au moins un premier dispositif électrique (36) qui est une machine électrique (36),
**caractérisé en ce que** l'étage de transmission (22) est réalisé sous la forme d'un engrenage épicycloïdal magnétique à trois arbres, et l'engrenage épicycloïdal magnétique à trois arbres présente un anneau intérieur (38) pourvu d'un premier nombre de paires de pôles, un anneau extérieur (40) pourvu d'un deuxième nombre de paires de pôles et un anneau central (42) pourvu d'un nombre de tiges polaires, les tiges polaires étant disposées de telle sorte qu'elles modulent un champ magnétique entre les paires de pôles, et
l'anneau intérieur (38) présente un plus grand nombre de paires de pôles que l'anneau extérieur (40), et
l'anneau extérieur (40) est réalisé sous la forme d'un arbre différentiel et le dispositif électrique (36) est intégré dans l'étage de transmission (22) par l'intermédiaire de l'anneau extérieur (40) **en ce que** des bobines sont disposées autour de l'anneau extérieur (40).

2. Ensemble de différentiel selon la revendication 1, **caractérisé en ce que** l'élément d'entrée (20) est un arbre totalisateur et est entraîné mécaniquement, chaque élément de sortie (26, 28) étant relié à un arbre.

3. Ensemble de différentiel selon l'une quelconque des revendications 1 à 2, **caractérisé en ce que** l'ensemble (24) ne présente pas de rapport fixe entier.

4. Ensemble de différentiel selon la revendication 3, **caractérisé en ce que** le rapport fixe n'est pas exactement égal à -1 ou +2 mais présente un écart par rapport à ces valeurs, l'écart étant de préférence d'au moins 0,1 %, en particulier d'au moins 1 %.

5. Ensemble de différentiel selon l'une quelconque des revendications 1 à 4, **caractérisé en ce que** l'étage de transmission (22) est réalisé sous la forme d'un différentiel de verrouillage, en particulier sous la forme d'un différentiel à verrouillage à commande électronique.

6. Ensemble de différentiel selon l'une quelconque des revendications 1 à 5, **caractérisé en ce que** le premier dispositif électrique (36) communique au moins avec un autre dispositif électrique.
